# EUROPÄISCHE PATENTSCHRIFT

(11) **EP 2 850 497 B1**
(45) Veröffentlichungstag und Bekanntmachung des Hinweises auf die Patenterteilung: **24.08.2016**
(21) Anmeldenummer: 13724212.9
(22) Anmeldetag: 13.05.2013
(51) Int. Cl.: G06Q 10/00, G05B 19/409, G06Q 10/06

(54) **ZUORDNEN EINES AUFTRAGS VON EINEM AUFTRAGGEBER AN EINEN AUFTRAGNEHMER**
ASSIGNING AN ORDER FROM A CLIENT TO A CONTRACTOR
ALLOCATION D'UNE COMMANDE D'UN DONNEUR D'ORDRE À UN PRENEUR D'ORDRE

(30) Priorität: 15.05.2012 DE 102012208135
(43) Veröffentlichungstag der Anmeldung: 25.03.2015
(73) Patentinhaber: Primetals Technologies Germany GmbH, 91052 Erlangen (DE)
(72) Erfinder: LEHOFER, Martin, Plainsboro, NJ 08536 (US)
(74) Vertreter: Metals@Linz
(86) Internationale Anmeldenummer: PCT/EP2013/059793
(87) Internationale Veröffentlichungsnummer: WO 2013/171149

(56) Entgegenhaltungen:
- WO-A1-03/050626
- US-A1- 2011 320 293

## Beschreibung

### Gebiet der Technik

Die vorliegende Erfindung betrifft ein Verfahren zum Zuordnen eines Auftrags zur Überprüfung eines Elementes einer Industrieanlage von einem Auftraggeber an einen Auftragnehmer, wobei dem Auftrag und dem Auftragnehmer je eine eindeutige Kennung zugeordnet sind, und der Auftraggeber und der Auftragnehmer über je ein mobiles Bediengerät verfügen, das eine Schnittstelle zu einem drahtlosen, paketorientierten Netzwerk und eine Schnittstelle zur Nahfeldkommunikation (engl. NFC) aufweist.

### Stand der Technik

Industrieanlagen bzw. die einzelnen Baugruppen, Bauteile oder Einzelteile (nachfolgend auch als Elemente bezeichnet) von Industrieanlagen müssen regelmäßig überprüft werden, um die Funktionsfähigkeit der Anlage sicherstellen zu können. Dabei werden von einem Auftraggeber, wie einem Schichtmeister, Aufträge zur Überprüfung eines Elements der Industrieanlage an einen Auftragnehmer, wie einem Mitarbeiter der Instandsetzung, zugeordnet. Ein Element kann beispielsweise eine Baugruppe wie eine Stranggießmaschine, ein Bauteil wie eine Strangführungsrolle der Stranggießmaschine, oder ein Einzelteil wie ein Mantel der Strangführungsrolle sein. Nach dem Stand der Technik werden die Aufträge zur Überprüfung (z.B. eine Sichtprüfung eines Bauteils) eines Elements der Industrieanlage entweder mündlich, schriftlich oder elektronisch dem Auftragnehmer zugeordnet. Nachteilig an der mündlichen Auftragszuordnung ist, dass die Zuordnung des Auftrags im Allgemeinen nicht dokumentiert wird und weitere Informationen zur Durchführung des Auftrags zumeist entweder schriftlich oder elektronisch an den Auftragnehmer gegeben werden müssen. Nachteilig an der schriftlichen bzw. elektronischen (z.B. mittels eines sog. *Workflow-Systems* oder *Ticketing-Systems)* Auftragsvergabe ist, dass die Zuordnung des Auftrags vom Auftraggeber an den Auftragnehmer häufig unbestätigt bleibt bzw. es keine direkte Interaktion zwischen dem Auftraggeber und dem Auftragnehmer gibt. Somit kann es aber zu Unklarheiten kommen, die in der Folge zu einer falschen oder unzureichenden Abarbeitung des Auftrags führen können (z.B. die Überprüfung eines falschen Elements). Die Zuweisung von Aufträgen über elektronische Systeme ist aufwändig, da viele einzelne Aktionen mit Bediengeräten (z.B. Mitarbeiter in einer Liste suchen) erforderlich sind. Außerdem nimmt die Auftragsvergabe, z.B. in Form einer Gruppenbesprechung beim Schichtwechsel, eine lange Zeit in Anspruch. Deshalb erfolgt die Auftragsvergabe oft schon vor der Gruppenbesprechung unter Zeitdruck, da die Mitarbeiter während der Gruppenbesprechung keine Arbeiten ausführen können.

Aus der US 2011/0 320 293 A1 ist ein Verfahren zum Bestellen und Bezahlen von Gütern und Dienstleistungen mittels einer Nahfeldkommunikation bekannt. Bei diesem Verfahren übermittelt eine feste Einrichtung an eine mobile Einrichtung wie beispielsweise ein Smartphone Informationen über das zu bestellende Gut bzw. die zu bestellende Dienstleistung. Falls der Bediener des Smartphones einen Bestätigungsbefehl eingibt, übermittelt das Smartphone die entsprechenden Daten über ein drahtloses Netzwerk an einen Server und vervollständigt dadurch die Bestellung.

### Zusammenfassung der Erfindung

Die Aufgabe der Erfindung ist es, die Nachteile des Stands der Technik zu überwinden und ein Verfahren zum Zuordnen eines Auftrags zur Überprüfung eines Elementes einer Industrieanlage von einem Auftraggeber an einen Auftragnehmer anzugeben, bei dem die Zuordnung
- rasch,
- gut dokumentiert,detailliert, d.h. gegebenenfalls durch Bereitstellung zusätzlicher auftragsspezifischer Informationen (wie Handbücher, Fotos, Videos etc.), und
- durch eine direkte Interaktion zwischen dem Auftraggeber und dem Auftragnehmer erfolgt.

Diese Aufgabe wird durch ein Verfahren nach Anspruch 1 gelöst. Vorteilhafte Ausführungsformen sind Gegenstand der abhängigen Ansprüche.

Konkret erfolgt die Lösung durch ein Verfahren zum Zuordnen eines Auftrags zur Überprüfung eines Elementes einer Industrieanlage von einem Auftraggeber an einen Auftragnehmer,
wobei dem Auftrag und dem Auftragnehmer je eine eindeutige Kennung zugeordnet sind, und der Auftraggeber und der Auftragnehmer über je ein mobiles Bediengerät verfügen, das eine Schnittstelle zu einem drahtlosen, paketorientierten Netzwerk und eine Schnittstelle zur Nahfeldkommunikation aufweist, umfassend die Verfahrensschritte:
- Aussenden der Kennung des Auftrags über die Schnittstelle zur Nahfeldkommunikation des Bediengeräts des Auftraggebers;
- Empfangen der Kennung des Auftrags über die Schnittstelle zur Nahfeldkommunikation des Bediengeräts des Auftragnehmers;
- Aussenden der Kennung des Auftragnehmers über die Schnittstelle zur Nahfeldkommunikation des Bediengeräts des Auftragnehmers;
- Empfangen der Kennung des Auftragnehmers über die Schnittstelle zur Nahfeldkommunikation des Bediengeräts des Auftraggebers; und
- Zuordnen des Auftrags an den Auftragnehmer.

Beim erfindungsgemäßen Verfahren verfügen der Auftraggeber und der Auftragnehmer über je ein tragbares elektronisches Bediengerät, beispielsweise einen Tablet-Computer der für den Einsatz im Industriebereich geeignet ist. Jedes Bediengerät weist eine Schnittstelle zu einem drahtlosen, paketorientierten Netzwerk (z.B. eine GSM, UMTS, LTE oder DECT Netz) und eine Schnittstelle zur Nahfeldkommunikation (engl. *Near Field Communication* NFC) auf. Unter Schnittstelle wird in dieser Schrift eine Einheit mit einem Sender und einem Empfänger verstanden. Zur Zuordnung eines Auftrags, der zwecks Unterscheidbarkeit eine eindeutige Kennung (engl. *Identification* ID) aufweist, vom Auftraggeber an den Auftragnehmer werden die Bediengeräte des Auftraggebers und des Auftragnehmers in den unmittelbaren Nahbereich zueinander gebracht, sodass über die NFC Schnittstellen der Bediengeräte Informationen ausgetauscht werden können. Zuerst sendet das Bediengerät des Auftraggebers (z.B. ein Schichtführer oder - meister) die Kennung des Auftrags in Form eines Funksignals über die NFC Schnittstelle aus, wobei das Bediengerät des Auftragnehmers das Funksignal über dessen NFC Schnittstelle empfängt. Die Kennung des Auftrags wird anschließend in einer Recheneinheit des Bediengeräts des Auftragnehmers verarbeitet.

Optional kann vorgesehen sein, dass der Empfang der Kennung des Auftrags dem Auftragnehmer mitgeteilt wird (z.B. über eine Anzeige am Bediengerät oder eine akustische Ausgabe), sodass der Auftragnehmer entscheiden kann, ob der Auftrag angenommen werden soll. Alternativ ist es jedoch ebenso gut möglich, dass Aufträge von bestimmten Personen immer angenommen werden.

Anschließend sendet das Bediengerät des Auftragnehmers über dessen NFC Schnittstelle die Kennung des Auftragnehmers an den Auftraggeber zurück, wobei das Bediengerät des Auftraggebers die Kennung des Auftragnehmers über die NFC Schnittstelle einliest. Durch das Zurücksenden der Kennung des Auftrags an den Auftraggeber wird die Annnahme des Auftrags bestätigt, sodass der Auftrag an den Auftragnehmer zugeordnet wird. Vorteilhaft am erfindungsgemäßen Verfahren ist, dass die Zuordnung des Auftrags zum einen schnell, papierlos und gut dokumentiert wird und zum anderen es eine unmittelbare Interaktion zwischen den beteiligten Parteien Auftraggeber und -nehmer gibt.

Das erfindungsgemäße Verfahren kann in gleicher Art und Weise anstelle von Funksignalen bei der NFC Kommunikation auch mit optischen Signalen (z.B. Laser-, Infrarot- oder UV-Licht) oder akustischen Signalen durchgeführt werden.

Weiters kann ein Auftrag - sofern dies nicht beschränkt oder unzulässig ist - in derselben Art und Weise vom ursprünglichen Auftragnehmer, der dadurch zum Auftraggeber wird, an einen weiteren Auftragnehmer weitergegeben werden.

Zur Dokumentation der Zuordnung des Auftrags ist es vorteilhaft, wenn beim Zuordnen des Auftrags das Bediengerät des Auftraggebers die Kennungen des Auftrags und des Auftragnehmers über das drahtlose, paketorientierte Netzwerk an einen Auftragsrechner sendet, der die Zuordnung des Auftrags abspeichert. In diesem Fall weist auch der Auftragsrechner - d.h. ein Rechner der mit der Auftragsvergabe befasst ist, z.B. ein Anlagenleitsystem oder ein Condition Monitoring System oder ein Instandhaltungs-Management-System, dass dem Anlagenleitsystem zugeordnet ist - eine Schnittstelle zum drahtlosen, paketorientierten Netzwerk auf.

Im Anschluss daran ist es vorteilhaft, wenn der Auftragsrechner die Kennung des Auftrags über das drahtlose, paketorientierte Netzwerk an das Bediengerät des Auftragnehmers sendet, der die Zuordnung des Auftrags am Bediengerät abspeichert.

Weiters ist es oft vorteilhaft, wenn zusätzlich zu den Kennungen des Auftrags und des Auftragnehmers eine weitere auftragsspezifische Information an das Bediengerät des Auftragnehmers gesendet wird, z.B. ein Datenblatt für ein zu überprüfendes Element in einer Anlage.

Alternativ zur Übertragung der Kennung über den Auftragsrechner kann das Bediengerät des Auftraggebers die Kennung des Auftrags über eine drahtlose Schnittstelle direkt an das Bediengerät des Auftragnehmers senden, der die Zuordnung des Auftrags am Bediengerät abspeichert. Dabei kann das drahtlose Netzwerk als drahtloses paketorientiertes Netzwerk aber auch als ein Netzwerk zwischen zwei NFC Schnittstellen ausgebildet sein.

Auch bei dieser Variante ist es oft vorteilhaft, wenn zusätzlich zur Kennung des Auftrags eine weitere auftragsspezifische Information an das Bediengerät des Auftragnehmers gesendet wird.

Es ist zweckmäßig, wenn die Kennung des Auftrags und gegebenenfalls die weiteren auftragsspezifische Information am Bediengerät des Auftragnehmers ausgegeben werden, z.B. auf einer Anzeige am Bediengerät oder durch Sprachausgabe.

Zur Mitteilung der Zuordnung eines Auftrags ist es vorteilhaft, wenn die Zuordnung des Auftrags zumindest am Bediengerät des Auftragnehmers, gegebenenfalls auch auf dem Bediengerät des Auftraggebers, durch eine Tonausgabe, eine graphische Ausgabe auf einer Anzeige, ein Vibrationssignal oder das Auslösen des Kamerablitzes/Kameralichtes bestätigt wird.

Nachdem sowohl ein *Uniform Resource Identifier* URI als auch ein *Uniform Resource Locator* URL dem Fachmann bekannt sind (http://de.wikipedia.org/wiki/Uniform Resource Identifier bzw. http://de.wikipedia.org/wiki/URL) ist es zweckmäßig, wenn die Kennung des Auftrags ein URI oder URL ist.

Da bei einer Überprüfung eines Elements in einer Industrieanlage viele Aufträge zugeordnet und weitere Informationen rasch und zuverlässig übertragen werden müssen, ist es vorteilhaft, das Verfahren bei der Überprüfung eines Elements in einer Industrieanlage einzusetzen.

Ein Verfahren zur Lokalisierung eines Elements in einer Industrieanlage durch das Bediengeräts des Auftragnehmers umfasst vorteilhafterweise folgende Verfahrensschritte:
- Zuordnen des Auftrags vom Auftraggeber an dem Auftragnehmer zur Lokalisierung des Elements in der Industrieanlage;
- Vorgabe einer Ziel-Position Pos_{Ziel} des Elements;
- Bestimmung einer Ist-Position Pos_{Ist} und einer Ist-Ausrichtung ϕ_{Ist} des Bediengeräts;
- Berechnung eines Abstands r und einer Winkelabweichung Δϕ zwischen der Ziel-Position Pos_{Ziel} und der Ist-Position Pos_{Ist};
- wenn der Betrag der Winkelabweichung Δϕ < ε_{ϕ} und der Abstand r < εᵣ beträgt: Ausgabe eines Zielrahmens am Bediengerät, sodass das Element durch den Zielrahmen eindeutig lokalisiert wird,
wobei das Zuordnen des Auftrags vom Auftraggeber an den Auftragnehmer zur Lokalisierung des Elements in der Industrieanlage durch das erfindungsgemäße Verfahren erfolgt. Für weitere Details zum Verfahren zur Lokalisierung eines Elements in einer Industrieanlage wird auf die unveröffentlichte Patentanmeldung DE102012206538.5 verwiesen.

Besonders vorteilhaft ist es, wenn die Vorgabe der Ziel-Position Pos_{Ziel} des Elements ebenfalls erfindungsgemäß erfolgt, wobei die Ziel-Position Pos_{Ziel} neben der Kennung des Auftrags an das Bediengerät des Auftragnehmers übertragen wird. Damit können Fehler bei der Vorgabe der Ziel-Position vermieden werden.

### Kurze Beschreibung der Zeichnungen

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:

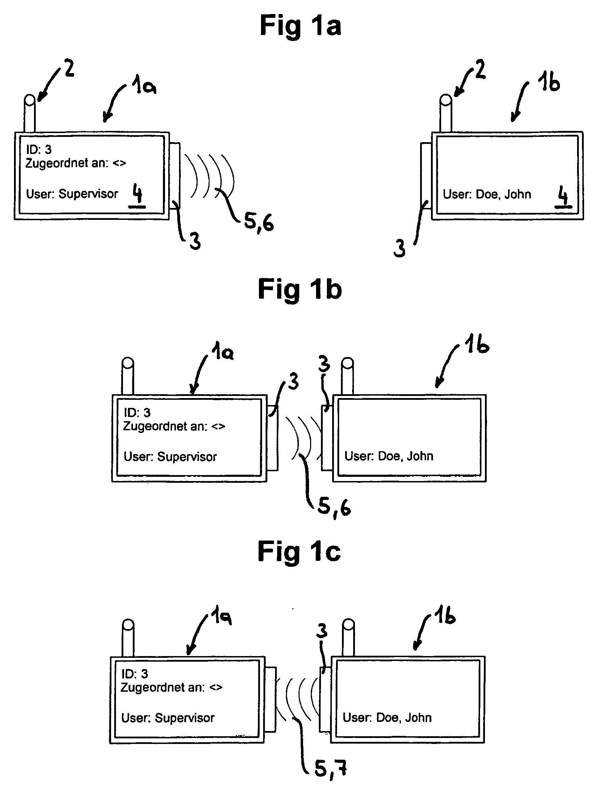

Fig 1a eine Darstellung der Situation vor der Zuordnung eines Auftrags
Fig 1b eine Darstellung bei der Übertragung einer Kennung des Auftrags vom Bediengerät des Auftraggebers an das Bediengerät des Auftragnehmers
Fig 1c eine Darstellung bei der Übertragung der Kennung des Auftragsnehmers vom Bediengerät des Auftragnehmers an das Bediengerät des Auftraggebers

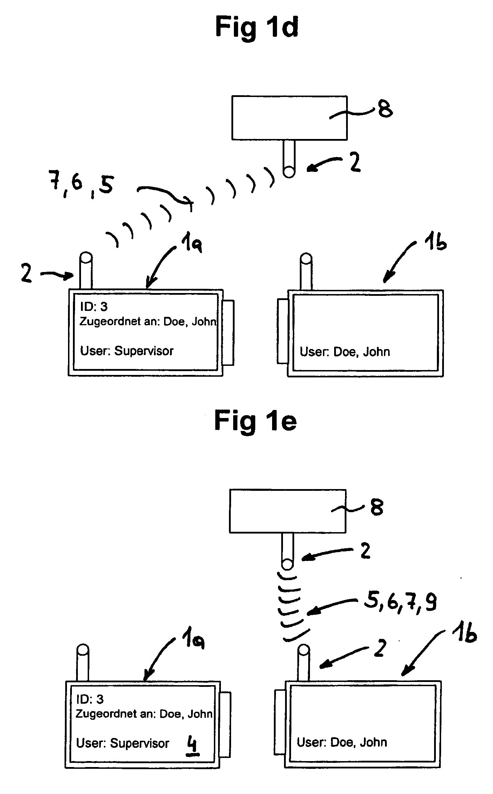

Fig 1d eine Darstellung bei der Übertragung der Kennungen des Auftrags und des Auftragsnehmers vom Bediengerät des Auftraggebers an einen Auftragsrechner
Fig 1e eine Darstellung bei der Übertragung der Kennungen des Auftrags und des Auftragsnehmers vom Auftragsrechner an das Bediengerät des Auftragnehmers

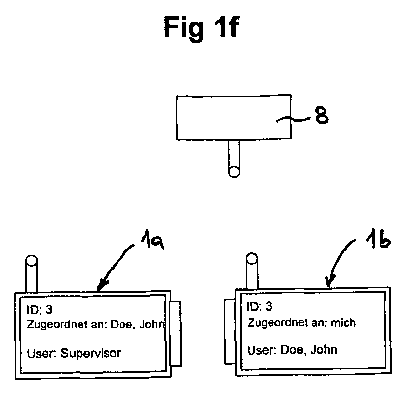

Fig 1f eine Darstellung der Situation nach der Zuordnung des Auftrags an den Auftragnehmer

### Beschreibung der Ausführungsformen

In den Subfiguren 1a-1f der Fig 1 wird die erfindungsgemäße Zuordnung eines Auftrags mit der eindeutigen Kennung 6 "3" von einem Bediengerät 1a eines Auftraggebers auf das Bediengerät 1b eines Auftragnehmers dargestellt.

Die Fig 1a zeigt das Bediengerät 1a, das dem nicht dargestellten Auftraggeber, und das Bediengerät 1b, das dem nicht dargestellten Auftragnehmer, zugeordnet ist. Beide Bediengeräte 1a, 1b sind als mobile Tablet-Computer oder Smartphones ausgeführt, die im industriellen Umfeld eingesetzt werden können. Typischerweise werden die Bediengeräte 1a, 1b vom Auftraggeber bzw. dem Auftragnehmer händisch gehalten. Jedes Bediengerät 1a, 1b verfügt über eine Anzeige 4, die sich auf der dem Bediener zugewandten Seite befindet, eine NFC Schnittstelle 3 und eine Schnittstelle zu einem WLAN Netzwerk 2. Die Zuordnung von Aufträgen kann beispielsweise im Rahmen einer Schichtbesprechung an einer metallurgischen Anlage, beispielsweise an einem Walzwerk, erfolgen, wobei der Auftraggeber, konkret der Schichtführer der Anlage mit der Kennung "Supervisor", Aufträge zur Überprüfung eines Elements der Anlage, an den Auftragnehmer, konkret einen Mitarbeiter mit der Kennung 7 "Doe, John", vergibt.

In der Fig 1a ist die Situation dargestellt, wo beide Bediengeräte 1a, 1b einen Abstand von ca. 5 m zueinander aufweisen, der größer ist als die max. Reichweite (typischerweise 0,1 m) eines NFC Funksignals 5. Auf der Anzeige 4 des Bediengeräts 1a ist dargestellt, dass der Auftraggeber mit der Kennung *"Supervisor"* einen derzeit nicht zugeordneten Auftrag mit der Kennung 6 "3" zugeordnen soll.

In der Fig 1b wurden die Bediengeräte 1a, 1b in unmittelbare Nähe zueinander gebracht, sodass das Funksignal 5 mit der Kennung 6 des Auftrags ausgehend von der NFC Schnittstelle 3 des Bediengeräts 1a die NFC Schnittstelle 3 des Bediengeräts 1b erreichen kann.

In Fig 1c ist die Situation dargestellt, bei der das Bediengerät 1b des Auftragnehmers die Kennung 6 des Auftrags empfangen hat.

Optional kann der Empfang der Kennung 6 des Auftrags auf der Anzeige 4 des Bediengeräts 1b dargestellt werden, sodass der Auftragnehmer entscheiden kann, ob der Auftrag angenommen werden soll oder nicht.

Gemäß Fig 1c sendet die NFC Schnittstelle 3 des Bediengeräts 1b des Auftragnehmers eine Kennung des Auftraggebers 7 an das Bediengerät 1a des Auftraggebers zurück. Durch den Empfang der Kennung 7 des Auftragnehmers wird dem Bediengerät 1a des Auftraggebers mitgeteilt, dass der Auftragnehmer bereit ist den Auftrag zu übernehmen. Somit kann der Auftrag mit der Kennung "3" dem Auftragnehmer mit der Kennung "Doe, John" zugeordnet werden.

Nach Fig 1d überträgt das Bediengerät 1a über eine Schnittstelle zu einem WLAN Netzwerk 2 die Kennung des Auftrags 6 und die Kennung des Auftragnehmers 7 an einen Auftragsrechner 8. Als Auftragsrechner 8 soll in dieser Schrift eine Recheneinheit verstanden werden, die zumindest teilweise mit der Zuordnung von Aufträgen befasst ist. Die Kennung des Auftrags 6 und die Kennung des Auftragnehmers 7 werden von der WLAN Schnittstelle 2 des Auftragsrechners 8 empfangen und gemäß Fig 1e wiederum über die WLAN Schnittstellen des Auftragsrechners 8 an das Bediengerät 1b, das dem Auftragnehmer zugeordnet ist, über Funksignale 5 übertragen.

Zusätzlich zu den Kennungen 6 und 7 überträgt der Auftragsrechner 8 auftragsspezifische Informationen 9 an das Bediengerät 1b des Auftragnehmers. Konkret handelt es sich dabei um ein Datenblatt und ein Foto eines zu überprüfenden Elements des Walzwerks. Mittels dieser zusätzlichen Informationen kann der Auftragnehmer die Überprüfung des Elements in der Anlage gezielt vornehmen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1a,1b: Bediengerät
- 2: WLAN Schnittstelle
- 3: NFC Schnittstelle
- 4: Anzeige
- 5: Funkwelle
- 6: Kennung des Auftrags
- 7: Kennung des Auftragnehmers
- 8: Auftragsrechner
- 9: zusätzliche auftragsspezifische Information

## Patentansprüche

1. Verfahren zum Zuordnen eines Auftrags zur Überprüfung eines Elementes einer Industrieanlage von einem Auftraggeber an einen Auftragnehmer, wobei dem Auftrag und dem Auftragnehmer je eine eindeutige Kennung (6,7) zugeordnet sind, und der Auftraggeber und der Auftragnehmer über je ein mobiles Bediengerät (1a,1b) verfügen, das eine Schnittstelle zu einem drahtlosen, paketorientierten Netzwerk (2) und eine Schnittstelle zur Nahfeldkommunikation (3) aufweist, umfassend die Verfahrensschritte:
- Aussenden der Kennung (5,6) des Auftrags über die Schnittstelle zur Nahfeldkommunikation (3) des Bediengeräts des Auftraggebers (1a);
- Empfangen der Kennung (5,6) des Auftrags über die Schnittstelle zur Nahfeldkommunikation (3) des Bediengeräts des Auftragnehmers (1b);
- Aussenden der Kennung des Auftragnehmers (5,7) über die Schnittstelle zur Nahfeldkommunikation (3) des Bediengeräts des Auftragnehmers (1b);
- Empfangen der Kennung des Auftragnehmers (5,7) über die Schnittstelle zur Nahfeldkommunikation (3) des Bediengeräts des Auftraggebers (1a);
- Zuordnen des Auftrags an den Auftragnehmer.

2. Verfahren nach Anspruch 1, mit einem Auftragsrechner (8), der eine Schnittstelle zum drahtlosen, paketorientierten Netzwerk (2) aufweist, **dadurch gekennzeichnet, dass** beim Zuordnen des Auftrags das Bediengerät des Auftraggebers (1a) die Kennungen des Auftrags (6) und des Auftragnehmers (7) über das drahtlose, paketorientierte Netzwerk an den Auftragsrechner (8) sendet, der die Zuordnung des Auftrags an den Auftragnehmer abspeichert.

3. Verfahren nach Anspruch 2, **dadurch gekennzeichnet, dass** der Auftragsrechner (8) die Kennungen des Auftrags (6) und des Auftragnehmers (7) über das drahtlose, paketorientierte Netzwerk an das Bediengerät des Auftragnehmers (1b) sendet, der die Zuordnung des Auftrags am Bediengerät (1b) abspeichert.

4. Verfahren nach einem der vorhergehenden Ansprüche, **dadurch gekennzeichnet, dass** das Bediengerät des Auftraggebers (1a) die Kennungen des Auftrags (6) und des Auftragnehmers (7) über eine drahtlose Schnittstelle (2,3) direkt an das Bediengerät des Auftragnehmers (1b) sendet, der die Zuordnung des Auftrags am Bediengerät (1b) abspeichert.

5. Verfahren nach einem der Ansprüche 3 bis 4, **dadurch gekennzeichnet, dass** zusätzlich zu den Kennungen des Auftrags (6) und des Auftragnehmers (7) eine weitere auftragsspezifische Information (9) an das Bediengerät des Auftragnehmers (1b) gesendet wird.

6. Verfahren nach Anspruch 5, **dadurch gekennzeichnet, dass** die Kennung des Auftrags (6) und gegebenenfalls die weitere auftragsspezifische Information (9) am Bediengerät des Auftragnehmers (1b) ausgegeben werden.

7. Verfahren nach Anspruch 1, **dadurch gekennzeichnet, dass** die Kennung des Auftrags (6) ein URI oder ein URL ist.

8. Verfahren nach Anspruch 1, **dadurch gekennzeichnet, dass** nach dem Empfangen der Kennung des Auftrags (6) das Bediengerät (1b) beim Auftragnehmer anfragt, ob der Auftrag angenommen werden soll, wobei bei einer Auftragsannahme die Kennung des Auftragnehmers (7) über die Schnittstelle zur Nahfeldkommunikation (3) an das Bediengerät des Auftraggebers (1a) übertragen wird.

9. Verfahren nach Anspruch 1, **dadurch gekennzeichnet, dass** die Zuordnung des Auftrags zumindest am Bediengerät (1b) des Auftragnehmers durch eine Tonausgabe, ein Vibrationssignal oder das Auslösen des Kamerablitzes bestätigt wird.

10. Verfahren nach einem der vorhergehenden Ansprüche, **dadurch gekennzeichnet, dass** das Verfahren bei der Lokalisierung eines Elements in einer Industrieanlage eingesetzt wird.

11. Verfahren zur Lokalisierung eines Elements in einer Industrieanlage durch ein Bediengerät eines Auftragnehmers (1b), umfassend die Verfahrensschritte:
- Zuordnen eines Auftrags von einem Auftraggeber an den Auftragnehmer nach einem der vorhergehenden Ansprüche zur Lokalisierung des Elements in der Industrieanlage;
- Vorgabe einer Ziel-Position Pos_{Ziel} des Elements;
- Bestimmung einer Ist-Position Pos_{Ist} und einer Ist-Ausrichtung ϕ_{Ist} des Bediengeräts;
- Berechnung eines Abstands r und einer Winkelabweichung Δϕ zwischen der Ziel-Position Pos_{Ziel} und der Ist-Position Pos_{Ist};
- wenn der Betrag der Winkelabweichung Δϕ < ε_{ϕ} und der Abstand r < εᵣ beträgt: Ausgabe eines Zielrahmens am Bediengerät des Auftragnehmers, sodass das Element durch den Zielrahmen eindeutig lokalisiert wird.

12. Verfahren nach Anspruch 11, **dadurch gekennzeichnet, dass** die Ziel-Position des Elements neben der Kennung des Auftrags (6) an das das Bediengerät des Auftragnehmers (1b) übertragen wird.

## Claims

1. Method for assigning an order for monitoring an element of an industrial plant from a client to a contractor, wherein the order and the contractor are each assigned a unique identification (6, 7) and the client and the contractor each have a mobile operating device (1a, 1b) which has an interface to a wireless, packet-oriented network (2) and an interface for Near Field Communication (3), comprising the method steps:
- Sending of the identification (5, 6) of the order via the interface for Near Field Communication (3) of the operating device of the client (1a);
- Receipt of the identification (5, 6) of the order via the interface for Near Field Communication (3) of the operating device of the contractor (1b);
- Sending of the identification of the contractor (5, 7) via the interface for Near Field Communication (3) of the operating device of the contractor (1b);
- Receipt of the identification of the contractor (5, 7) via the interface for Near Field Communication (3) of the operating device of the client (1a); and
- Assigning of the order to the contractor.

2. Method according to claim 1, with an order processing computer (8), which has an interface to the wireless, packet-oriented network (2), **characterised in that,** on assignment of the order, the operating device of the client (1a) sends the identifications of the order (6) and of the contractor (7) via the wireless, packet-oriented network to the order processing computer (8), which stores the assignment of the order to the contractor.

3. Method according to claim 2, **characterised in that** the order processing computer (8) sends the identifications of the order (6) and of the contractor (7) via the wireless, packet-oriented network to the operating device of the contractor (1b), who stores the assignment of the order on the operating device (1b).

4. Method according to one of the preceding claims, **characterised in that** the operating device of the client (1a) sends the identifications of the order (6) and of the contractor (7) via a wireless interface (2, 3) directly to the operating device of the contractor (1b), who stores the assignment of the order on the operating device (1b).

5. Method according to one of claims 3 to 4, **characterised in that,** in addition to the identifications of the order (6) and of the contractor (7), further order-specific information (9) is sent to the operating device of the contractor (1b).

6. Method according to claim 5, **characterised in that** the identification of the order (6) and if necessary the further order-specific information (9) are output on the operating device of the contractor (1b).

7. Method according to claim 1, **characterised in that** the identification of the order (6) is a URI or a URL.

8. Method according to claim 1, **characterised in that,** after the receipt of the identification of the order (6) the operating device (1b) asks the contractor whether the order is to be accepted, wherein on acceptance the identification of the contractor (7) is transmitted via the interface for Near Field Communication (3) to the operating device of the client (1a).

9. Method according to claim 1, **characterised in that** the assignment of the order is confirmed at least at the operating device (1b) of the contractor by output of tone, a vibration signal or triggering the camera flash.

10. Method according to one of the preceding claims, **characterised in that** the method is employed in the localisation of an element in an industrial plant.

11. Method for localising an element in an industrial plant by an operating device of a contractor (1b), comprising the method steps:
- Assignment of an order from a client to the contractor according to one of the preceding claims for localising the element in the industrial plant;
- Specifying a target position Pos_{target} of the element;
- Determining an actual position Pos_{act} and an actual alignment ϕ_{act} of the operating device;
- Computing a distance r and an angular deviation Δϕ between the target position Pos_{target} and the actual position Pos_{act};
- If the amount of the angular deviation amounts to Δϕ < εₚ and the distance amounts to r < εᵣ: output of a target framework on the operating device, so that the element is uniquely localised by the target framework,

12. Method according to claim 11, **characterised in that** the target position of the element is transmitted to the operating device of the contractor (1b) along with the identification of the order (6).

## Revendications

1. Procédé pour assigner un ordre pour la vérification d'un élément d'une installation industrielle, passé par un donneur d'ordre à un receveur d'ordre, dans lequel sont assignés à l'ordre et au receveur d'ordre un identifiant en clair (6, 7) chacun, et le donneur d'ordre et le receveur d'ordre disposent chacun d'un appareil de commande mobile (1a, 1b), qui comprend une interface vers un réseau sans fil orienté par paquets (2) et une interface pour une communication en champ proche (3), comprenant les étapes de procédé suivantes :
- envoi de l'identifiant (5, 6) de l'ordre par l'interface pour une communication en champ proche (3) de l'appareil de commande du donneur d'ordre (1a) ;
- réception de l'identifiant (5, 6) de l'ordre par l'interface pour une communication en champ proche (3) de l'appareil de commande du receveur d'ordre (1b) ;
- envoi de l'identifiant du receveur d'ordre (5, 7) par l'interface pour une communication en champ proche (3) de l'appareil de commande du receveur d'ordre (1b) ;
- réception de l'identifiant du receveur d'ordre (5, 7) par l'interface pour une communication en champ proche (3) de l'appareil de commande du donneur d'ordre (1a) ;
- assignation de l'ordre au receveur d'ordre.

2. Procédé selon la revendication 1, avec un calculateur d'ordre (8) qui comprend une interface vers un réseau sans fil orienté par paquets (2), **caractérisé en ce que** lors de l'assignation de l'ordre, l'appareil de commande du donneur d'ordre (1a) envoie au calculateur d'ordre (8) les identifiants de l'ordre (6) et du receveur d'ordre (7) par le réseau sans fil orienté par paquets, qui mémorise l'assignation de l'ordre au receveur d'ordre.

3. Procédé selon la revendication 2, **caractérisé en ce que** le calculateur d'ordre (8) envoie les identifiants de l'ordre (6) et du receveur d'ordre (7) par le réseau sans fil orienté par paquets à l'appareil de commande du receveur d'ordre (1b), qui mémorise l'assignation de l'ordre à l'appareil de commande (1b).

4. Procédé selon l'une des revendications précédentes, **caractérisé en ce que** l'appareil de commande du donneur d'ordre (1a) envoie les identifiants de l'ordre (6) et du receveur d'ordre (7) par une interface sans fil (2, 3) directement à l'appareil de commande du receveur d'ordre (1b), qui mémorise l'assignation de l'ordre à l'appareil de commande (1b).

5. Procédé selon l'une des revendications 3 à 4, **caractérisé en ce qu'**en plus des identifiants de l'ordre (6) et du receveur d'ordre (7), une autre information spécifique d'ordre (9) est envoyée à l'appareil de commande du receveur d'ordre (1b).

6. Procédé selon la revendication 5, **caractérisé en ce que** l'identifiant de l'ordre (6) et le cas échéant l'autre information spécifique d'ordre (9) sont émis vers l'appareil de commande du receveur d'ordre (1b).

7. Procédé selon la revendication 1, **caractérisé en ce que** l'identifiant de l'ordre (6) est un URI ou un URL.

8. Procédé selon la revendication 1, **caractérisé en ce qu'**après la réception de l'identifiant de l'ordre (6), l'appareil de commande (1b) demande au receveur d'ordre si l'ordre doit être accepté, auquel cas d'une acceptation de l'ordre, l'identifiant du receveur d'ordre (7) est transmis, par l'interface pour une communication en champ proche (3), à l'appareil de commande du donneur d'ordre (1a).

9. Procédé selon la revendication 1, **caractérisé en ce que** l'assignation de l'ordre est confirmée par une émission sonore, un signal vibratoire ou le déclenchement d'un flash d'appareil photographique, au moins à l'appareil de commande (1b) du receveur d'ordre.

10. Procédé selon l'une des revendications précédentes, **caractérisé en ce que** le procédé est utilisé lors de la localisation d'un élément dans une installation industrielle.

11. Procédé pour la localisation d'un élément dans une installation industrielle par un appareil de commande d'un receveur d'ordre (1b), comprenant les étapes de procédé suivantes :
- assignation d'un ordre d'un donneur d'ordre au receveur d'ordre selon l'une des revendications précédentes pour la localisation de l'élément dans l'installation industrielle ;
- spécification d'une position cible Pos_{cible} de l'élément ;
- détermination d'une position réelle Pos_{réelle} et d'un alignement réel ϕ_{réel} de l'appareil de commande ;
- calcul d'une distance r et d'une déviation angulaire Δϕ entre la position cible Pos_{cible} et la position réelle Pos_{réelle} ;
- lorsque la valeur de la déviation angulaire atteint Δϕ < ε_{ϕ} et que la distance r atteint r < εᵣ : émission d'un cadre cible dans l'appareil de commande du receveur d'ordre, de sorte que l'élément soit clairement localisé par le cadre cible.

12. Procédé selon la revendication 11, **caractérisé en ce que** la position cible de l'élément est transmise près de l'identifiant de l'ordre (6) à l'appareil de commande du receveur d'ordre (1b).
